Europäisches Patentamt

European Patent Office

Office européen des brevets

(19)

(11) Numéro de publication : **0 445 038 B1**

(12) **FASCICULE DE BREVET EUROPEEN**

(45) Date de publication du fascicule du brevet :
12.04.95 Bulletin 95/15

(51) Int. Cl.⁶ : **H04N 3/15**

(21) Numéro de dépôt : **91400555.8**

(22) Date de dépôt : **28.02.91**

(54) **Dispositif d'imagerie à balayage, comportant une matrice de capteurs à accumulation de charges.**

(30) Priorité : **01.03.90 FR 9002586**

(43) Date de publication de la demande :
**04.09.91 Bulletin 91/36**

(45) Mention de la délivrance du brevet :
**12.04.95 Bulletin 95/15**

(84) Etats contractants désignés :
**DE GB IT**

(56) Documents cités :
**EP-A- 0 223 119**

(73) Titulaire : **SOCIETE D'APPLICATIONS
GENERALES D'ELECTRICITE ET DE
MECANIQUE SAGEM
6, Avenue d'Iéna
F-75783 Paris Cédex 16 (FR)**

(72) Inventeur : **Metivier, Philippe
11 Rue de Heuruelles Vertes
F-95000 Cergy (FR)**

(74) Mandataire : **Fort, Jacques
CABINET PLASSERAUD
84, rue d'Amsterdam
F-75009 Paris (FR)**

**Description**

L'invention concerne les dispositifs d'imagerie du type comprenant une caméra ayant une matrice de capteurs à accumulation de charges, notamment de capteurs dits à couplage de charges, et des moyens permettant de transférer les charges accumulées par les capteurs, en un temps faible par rapport à la durée d'accumulation, soit en totalité à la fois dans une mémoire comportant un nombre de points de mémoire égal à celui des capteurs, soit à partir de chacune des lignes de capteurs dans une mémoire respective, puis de vider les mémoires par l'intermédiaire d'un registre à décalage recevant tout le contenu d'une colonne à la fois.

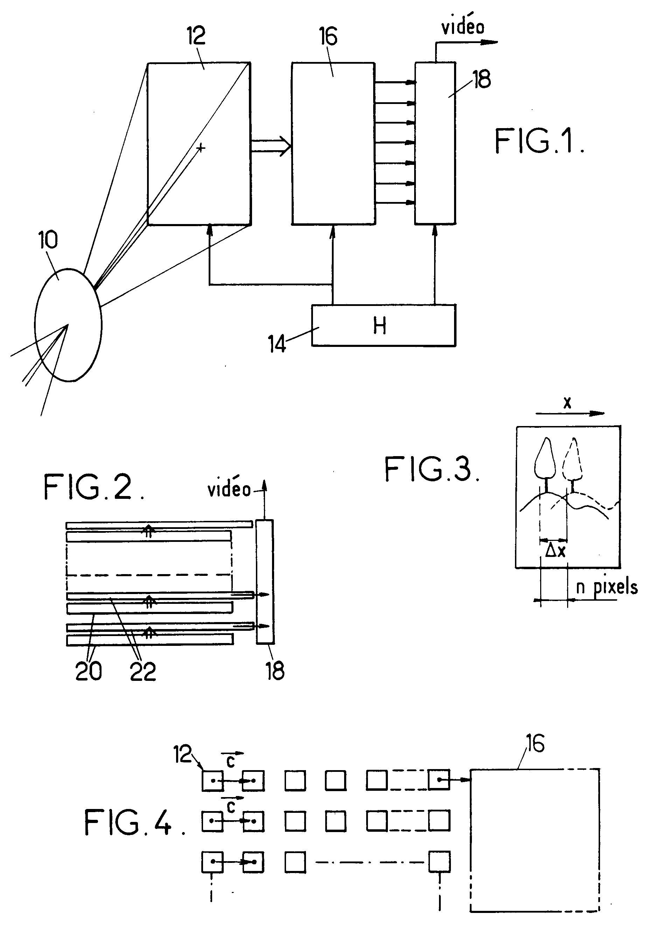

Les Figures 1 et 2 montrent la constitution de principe de dispositifs d'imagerie connus du type ci-dessus défini. Le dispositif montré en Figure 1 comprend une optique 10 de formation de l'image d'une scène sur une matrice de capteurs 12, distribués en lignes et colonnes. A l'issue d'un temps d'intégration $t_i$, une horloge 14 provoque le transfert des charges accumulées sur tous les capteurs vers une mémoire 16, dans le sens des lignes. La détection et l'accumulation des charges peuvent alors reprendre immédiatement sur la matrice 12. Les charges contenues dans chaque colonne à son tour sont transférées dans un registre à décalage 18 dont la sortie série constitue la sortie vidéo du dispositif.

La Figure 2 montre un dispositif utilisant au contraire une matrice à transfert ligne à ligne. A chaque ligne de capteurs 20 est associée une ligne de points de mémoire 22, où s'effectue l'accumulation des charges. Ces charges sont transférées, une colonne à la fois, dans un registre à décalage de sortie 18 similaire à celui de la Figure 1.

La disposition qui vient d'être décrite est utilisée à l'heure actuelle sur des caméras ayant un champ de vision fixe ou lentement variable. En effet, un temps d'intégration minimum est nécessaire pour avoir une sensibilité acceptable. Si le champ de la caméra était mobile, soit du fait des changements d'orientation de la caméra, soit du fait des mouvements d'un miroir de pointage ou de balayage placé sur le trajet du faisceau lumineux, la scène se déplacerait par rapport à la matrice au cours du temps d'intégration, ce qui se traduirait par une dégradation spatiale de l'information vidéo.

On connaît également des caméras comportant un organe sensible constitué par plusieurs lignes de capteurs placées parallèlement les unes aux autres, un miroir de balayage de l'organe sensible transversalement aux lignes et des moyens de décalage des charges d'une ligne à la suivante à une cadence synchronisée avec le déplacement de l'image d'une tranche de la scène sur la matrice. On a enfin proposé une telle caméra, fixe durant son utilisation, ne comportant pas de moyens de balayage et ayant des moyens de décalage des charges à une cadence choisie pour correspondre à la vitesse de défilement, dans le sens orthogonal aux lignes, d'un objet mobile dans le champ (EP-A-0 223 119).

L'invention vise à fournir un dispositif d'imagerie à balayage comportant une matrice de capteurs, n'exigeant que des modifications simples des moyens de commande d'une matrice de constitution classique, sans perte de résolution ou de sensibilité ; un résultat annexe que vise à atteindre l'invention consiste à permettre une surveillance à grand champ ou même panoramique avec une caméra ayant un champ étroit.

Dans ce but, l'invention propose un dispositif tel que défini dans la revendication 1 ou 2.

Les figures 1 et 2, déjà mentionnées, montrent la constitution de principe de dispositif d'imagerie fixe à matrice de capteurs.

Les figures 4 et 5 montrent l'évolution des charges au cours du transfert, respectivement dans le cas d'un dispositif à transfert de trames et d'un dispositif à transfert ligne à ligne.

La figure 6 montre schématiquement le déplacement d'une scène dans le champ de vision de la matrice en fonction du temps, dans le cas d'un recouvrement d'ordre égal à 3.

La figure 7 montre le mouvement partiel d'images successives lors du balayage.

La figure 8 est un schéma synoptique de circuits de cadencement utilisables pour mettre en oeuvre l'invention.

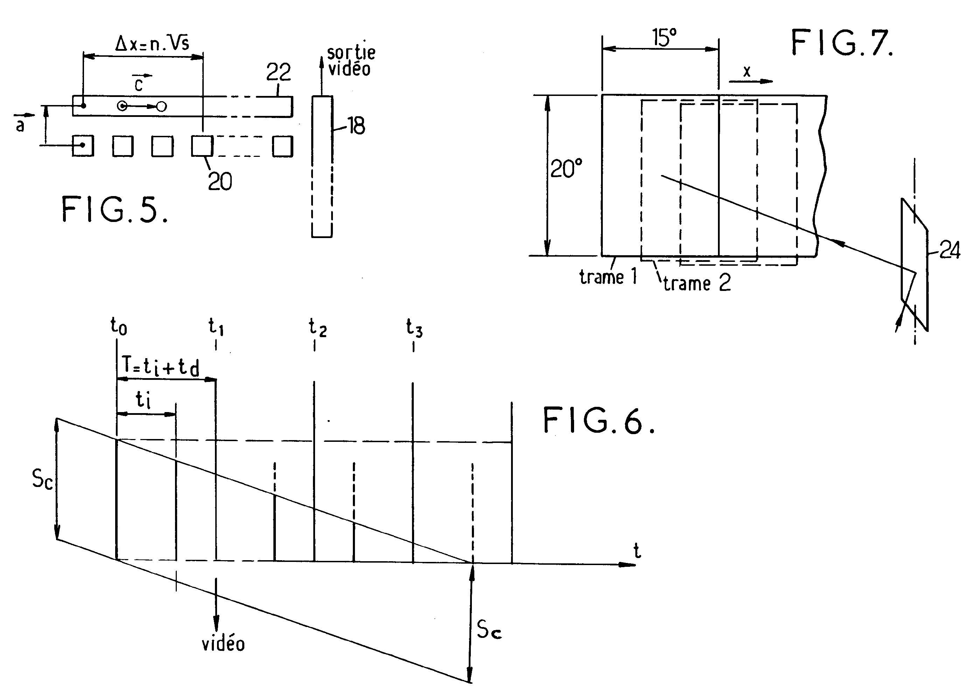

On supposera dans ce qui suit que le dispositif comporte des moyens de balayage, tels qu'un miroir 24 (figure 7), provoquant un défilement de l'image de la scène à vitesse Vs dans le sens indiqué par la flèche x sur la figure 3, c'est-à-dire dans le sens des lignes (sens de transfert des charges vers le registre à décalage 18). Pendant le temps d'intégration choisi $t_i$, la scène se déplace de $\Delta x = Vs.t_i$ au niveau de la matrice. On supposera que ce déplacement correspond à n détecteurs.

Pour éviter une dégradation spatiale de l'information vidéo, les charges doivent être déplacées dans le sens des lignes, à la même vitesse Vs que la vitesse de déplacement de l'image.

Dans le cas d'une matrice à transfert de trame (figure 4), où on transfère complètement et rapidement l'ensemble de l'image vers la zone mémoire 16 en un temps $t_d$, la matrice de capteurs 12 doit être commandée de façon à provoquer des transferts successifs des charges d'amplitude c correspondant à la distance entre capteurs successifs d'une même ligne, avec une période $t_i/n$, avant le transfert complet. La durée d'intégration $t_i$ doit dans la pratique être de quelques dizaines de ms et elle précède le transfert complet de trame, dont la durée $t_d$ est très inférieure.

En d'autres termes, un cycle de fonctionnement comprend :

- une durée $t_i$, au cours de laquelle on effectue, dans chaque colonne, n transferts successifs d'amplitude $\Delta x/n$ égale à la distance entre deux pixels ou capteurs successifs ;

- une durée $t_d$, au cours de laquelle on transfère la totalité des charges dans la mémoire 16, seuls étant significatifs les résultats mémorisés sur N-n positions mémoire (N étant le nombre de capteurs disponibles suivant l'axe de ligne x ).

L'exploitation du contenu de la mémoire 16 par transfert vers le registre 18 reste inchangée.

Dans le cas d'un matrice à transfert interligne (figure 5) chaque cycle de fonctionnement comprend :

- une durée $t_i$, au cours de laquelle il y a n opérations successives de lecture a et de transfert c d'amplitude $\Delta x/n$ d'un point mémoire à un autre, dans chaque ligne de mémoire 22 ;

- une durée $t_d$, au cours de laquelle il y a transfert, vers le registre à décalage 18, de toutes les lignes de mémoire, par des déplacements successifs c, mais sans opération de lecture et à cadence beaucoup plus élevée que pendant la durée $t_i$.

Dans les deux cas, la matrice permet d'obtenir, en un temps $t_i + t_d$, une image représentée par une pseudo-trame ayant le même nombre de lignes que la matrice et un nombre de colonnes significatives réduit du fait de l'intégration sur plusieurs capteurs successifs.

Mais tout point du secteur balayé apparaîtra néanmoins, sur P pseudo-trames consécutives (P étant appelé l'ordre de recouvrement de l'information spatiale). Cet ordre est donné par la formule :

$$P = (\frac{N}{n} - 1) ( 1 + t_d/t_i)^{-1}$$

Les figures 6 et 7 montrent schématiquement le déplacement suivant la direction de ligne x, en fonction du temps t, d'une scène d'ouverture correspondant à l'ouverture angulaire de la matrice dans le sens des lignes et la portion de cette scène qui est visualisée dans le cas d'un ordre de recouvrement P = 3. Cet ordre de recouvrement n'est pas le seul possible. Dans la pratique il peut être compris entre 2 et 10. Du fait du transfert pendant $t_i$, la première image disponible à $t_0 + t_i$ correspond à N-n pixels seulement ; un pixel en tête de cette image disponible sera encore disponible à $t_0 + t_i + T$ et $t_0 + t_i + 2T$, tandis qu'un pixel en queue à l'instant $t_0 + t_i$ a déjà été disponible deux fois.

A titre d'exemple, on donnera les caractéristiques d'un dispositif constitué à partir d'une matrice à transfert interlignes et format 4/3 ayant 582 pixels (dont 576 utilisables) par colonne et 500 pixels par ligne, avec des temps ti = 20 ms et td = 10 ms. Cette matrice est associée à un miroir 24 de balayage dans le sens x (direction des lignes) à une cadence donnant un taux de recouvrement P=3. La perte de champ dans le sens ligne correspond à un nombre de pixels égal au nombre n de capteurs sur lesquels s'effectue l'intégration, donnée par la formule :

$$n = N * [(1 + t_d/t_i) P + 1]^{-1}$$

avec N = 576, on trouve n = 105.

La vitesse de balayage Vs = n/i est égale à 5 240 pixels par seconde ce qui correspond à 136°/s dans le cas d'un champ de 15° dans la direction x. La résolution spatiale est d'envion 0,5 milliradians, c'est-à-dire 2 minutes.

Le dispositif peut également être utilisé pour faire une surveillance panoramique, en le faisant tourner à vitesse constante : la durée d'un tour est alors d'environ 2,6 secondes.

On voit que le dispositif permet d'effectuer une veille infrarouge ou visible avec une caméra à capteurs à accumulation de charges classique, avec une perte tolérable de champ à la partie haute de chaque bande visualisée. Mais il n'y a aucune perte de champ angulaire dans le sens transversal au balayage.

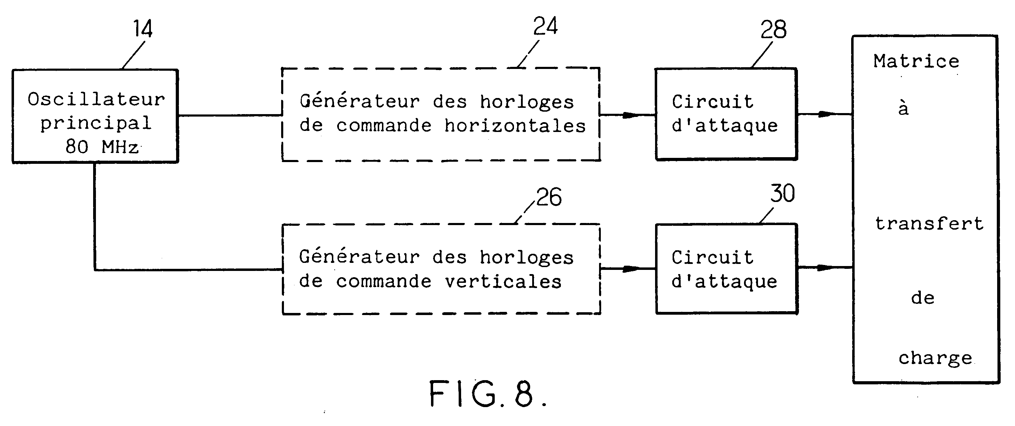

La constitution du dispositif selon l'invention n'implique que des modifications très limitées à une caméra classique, constituée par la génération de signaux de cadence supplémentaires à partir de l'horloge 14. La figure 8 montre une constitution possible des circuits fournissant les différents signaux de cadencement à partir du signal d'un oscillateur principal d'horloge 14, à une fréquence de 80 MHz. Les circuits supplémentaires nécessaires se limitent à deux générateurs 24 et 26 dont les sorties sont reliées aux circuits 28 et 30 d'attaque de la matrice de capteurs.

## Revendications

1. Dispositif d'imagerie comprenant une caméra ayant une matrice (12,20) de capteurs à accumulation de charges et des premiers moyens permettant de transférer les charges accumulées par les capteurs, en un temps faible par rapport à la durée d'accumulation, en totalité à la fois dans une mémoire matricielle (16) comportant un nombre de points de mémoire égal à celui des capteurs, et des seconds moyens permettant de vider la mémoire (16) par l'intermédiaire d'un registre à décalage (18) recevant le contenu de la mémoire (16) correspondant à toute une colonne à la fois de la matrice, caractérisé en ce qu'il comporte des moyens (24) de balayage destinés à faire circuler la scène observée sur la matrice dans le sens des lignes de la matrice, et en ce que les premiers moyens sont prévus pour transférer les charges des capteurs vers la mémoire, dans le sens des lignes, en synchronisme avec le balayage, pendant une durée égale à un temps

d'intégration prédéterminé ($t_i$), et en ce que les seconds moyens sont prévus pour transférer la totalité des charges de la mémoire vers le registre (18) pendant une durée courte par rapport au temps d'intégration ($t_i$).

2. Dispositif d'imagerie comprenant une caméra ayant une matrice (12,20) de capteurs à accumulation de charges et des premiers moyens permettant de transférer les charges accumulées par les capteurs, en un temps faible par rapport à la durée d'accumulation, à partir de chacune des lignes de capteurs (20) dans une mémoire respective (22) associée à chacune de ces lignes, et des seconds moyens permettant de vider simultanément les mémoires (22) par l'intermédiaire d'un registre à décalage (18) recevant le contenu des mémoires (22) correspondant à toute une colonne à la fois de la matrice, caractérisé en ce qu'il comporte des moyens (24) de balayage destinés à faire circuler la scène observée sur la matrice dans le sens des lignes de la matrice et en ce que les premiers moyens sont prévus pour transférer les charges des capteurs vers les mémoires, et transférer ces charges le long des mémoires dans le sens des lignes en synchronisme avec le balayage, pendant une durée égale à un temps d'intégration prédéterminé ($t_i$), et en ce que les seconds moyens sont prévus pour transférer la totalité des charges vers le registre (18) en une durée courte par rapport au temps d'intégration ($t_i$).

3. Dispositif selon l'une des revendications 1 ou 2, caractérisé en ce que le sens des lignes est celui dans lequel le champ optique est le plus faible.

4. Dispositif selon l'une des revendications 1, 2 ou 3, caractérisé en ce que la vitesse de balayage est choisie pour que le taux de recouvrement des images successives soit compris entre 2 et 10.

**Patentansprüche**

1. Abbildungsvorrichtung mit einer Kamera mit einer Matrix (12,20) von Sensoren mit Ladungsspeicherung und mit ersten Mitteln, die es erlauben, die gespeicherten Ladungen von den Sensoren in einer im Verhältnis zur Dauer der Speicherung geringen Zeit in ihrer Gesamtheit zugleich in einen Matrixspeicher (16) zu übertragen, der eine mit der Anzahl der Sensoren übereinstimmende Anzahl von Speicherpunkten aufweist, und mit zweiten Mitteln, die es erlauben, den Speicher (16) durch Zwischenschaltung eines Verschieberegisters (18) zu entleeren, das den Inhalt des Speichers (16) empfängt, der mit einer ganzen Reihe zugleich der Matrix entspricht,
dadurch gekennzeichnet,
daß diese Umlenkmittel (24) zum Zirkulierenlassen des beobachteten Bildes auf der Matrix im Sinne der Linien der Matrix aufweist und daß die ersten Mittel vorgesehen sind, um die Ladungen der Sensoren zum Speicher in Richtung der Linien in Synchronisation mit der Umlenkung während einer Zeitdauer zu übertragen, die gleich einer vorbestimmten Integrationszeit ($t_i$) ist, und daß die zweiten Mittel vorgesehen sind, um die Gesamtheit der Ladungen des Speichers zum Register (18) während einer im Verhältnis zur Integrationszeit ($t_i$) kurzen Zeitdauer zu übertragen.

2. Abbildungsvorrichtung mit einer Kamera mit einer Matrix (12,20) von Sensoren mit Ladungsspeicherung und mit ersten Mitteln, die es erlauben, die gespeicherten Ladungen von den Sensoren in einer im Verhältnis zur Dauer der Speicherung geringen Zeit ausgehend von jeder der Linien der Sensoren (20) in einen jeweiligen Speicher (22) zu übertragen, der jeweils mit jeder der Linien verbunden ist, und mit zweiten Mitteln, die es erlauben, gleichzeitig die Speicher (22) durch Zwischenschaltung eines Verschieberegisters (18) zu entleeren, das den Inhalt der Speicher (22) empfängt, die mit einer ganzen Reihe zugleich der Matrix übereinstimmen,
dadurch gekennzeichnet,
daß diese Umlenkmittel (24) zum Zirkulierenlassen des beobachteten Bildes auf der Matrix im Sinne der Linien der Matrix aufweist und daß die ersten Mittel vorgesehen sind, um die Ladungen der Sensoren zu den Speichern und diese Ladungen entlang der Speicher zu übertragen im Sinne der Linien in Synchronisation mit der Umlenkung während einer Zeitdauer zu übertragen, die gleich einer vorbestimmten Integrationszeit ($t_i$) ist, und daß die zweiten Mittel vorgesehen sind, um die Gesamtheit der Ladungen zum Register (18) in einer im Verhältnis zur Integrationszeit ($t_i$) kurzen Zeitdauer zu übertragen.

3. Vorrichtung nach einem der Ansprüche 1 oder 2,
dadurch gekennzeichnet,
daß die Richtung der Linien diejenige ist, in welcher das optische Feld am schwächsten ist.

4. Vorrichtung nach einem der Ansprüche 1, 2 oder 3,
dadurch gekennzeichnet,
daß die Umlenkgeschwindigkeit so ausgewählt ist, daß das Verhältnis der Überdeckung der aufeinanderfolgenden Bilder zwischen 2 und 10 liegt.

## Claims

1. An imaging system comprising a camera having an array (12, 20) of charge-accumulation detectors and first means enabling the charges accumulated by the detectors to be transferred in their entirety at a time, in a short time relatively to the accumulation time, to a matrix memory (16) comprising a number of memory points equal to the number of detectors, and second means whereby the memory (16) can be emptied by means of a shift register (18) receiving the contents of the memory (16) corresponding to a complete column at a time of the array, characterised in that it comprises scanning means (24) adapted to move the scene observed on the array in the direction of the lines of the array, and in that the first means are adapted to transfer the detector charges to the memory in the direction of the lines in synchronism with the scanning for a time equal to a predetermined integration time ($t_i$) and in that the second means are adapted to transfer the charges in their entirety from the memory to the register (18) during a short time relatively to the integration time ($t_i$).

2. An imaging system comprising a camera having an array (12, 20) of charge-accumulation detectors and first means enabling the charges accumulated by the detectors to be transferred, in a short time relatively to the accumulation time, from each of the lines of detectors (20) to a respective memory (22) associated with each of said lines, and second means adapted simultaneously to empty the memories (22) by means of a shift register (18) receiving the contents of the memories (22) corresponding to a complete column at a time of the array, characterised in that it comprises scanning means (24) adapted to move the scene observed on the array in the direction of the lines of the array, and in that the first means are adapted to transfer the detector charges to the memories and transfer said charges along the memories in the direction of the lines in synchronism with the scanning for a time equal to a predetermined integration time ($t_i$) and in that the second means are adapted to transfer the charges in their entirety to the register (18) during a short time relative to the integration time ($t_i$).

3. A system according to claim 1 or 2, characterised in that the direction of the lines is the direction in which the optical field is weakest.

4. A system according to claim 1, 2 or 3, characterised in that the scanning speed is so selected that the overlap rate of the successive images is between 2 and 10.

FIG.1.

FIG.2.

FIG.3.

FIG.4.

FIG.5.

FIG.7.

FIG.6.

EP 0 445 038 B1

Matrice à transfert de charge

28 — Circuit d'attaque

30 — Circuit d'attaque

24 — Générateur des horloges de commande horizontales

26 — Générateur des horloges de commande verticales

14 — Oscillateur principal 80 MHz

FIG. 8.